# EUROPÄISCHE PATENTANMELDUNG

(11) **EP 2 623 291 A1**
(43) Veröffentlichungstag der Anmeldung: **07.08.2013**
(21) Anmeldenummer: 12193509.2
(22) Anmeldetag: 21.11.2012
(51) Int. Cl.: B29C 45/16, B29C 45/00, F04D 29/22

(54) **Pumpenlaufrad und Verfahren zur Herstellung eines Pumpenlaufrades**

(30) Priorität: 31.01.2012 DE 102012100766
(71) Anmelder: NP Poschmann GmbH, 59929 Brilon (DE)
(72) Erfinder: Baukloh, Horst, 58540 Meinerzhagen (DE)
(74) Vertreter: Dörner, Kötter & Kollegen

(57) **Zusammenfassung**

Die Erfindung betrifft ein Verfahren zur Herstellung eines Pumpenlaufrades (1), umfassend folgende Schritte: Herstellung eines Unterteils (2) im Spritzgießverfahren, wobei Rastmittel zur Befestigung von Flügeln (42) angeordnet werden; Herstellung eines Oberteils (3) im Spritzgießverfahren, wobei Rastmittel zur Befestigung von Flügeln (42) angeordnet werden; Herstellung eines Flügelrings (4) im Spritzgießverfahren, umfassend eine Anzahl an Flügeln (42), welche über wenigstens einen Ring (41) miteinander verbunden sind, wobei Rastmittel (44, 44') zum Verrasten mit den Rastmitteln von Unterteil (2) und Oberteil (3) angeordnet werden; Montage des Pumpenlaufrades (1), wobei der Flügelring (4) zwischen Unterteil (2) und Oberteil (3) angeordnet wird und anschließend die Rastmittel (44, 44') des Flügelrings (4, 4') mit den Rastmitteln von Unterteil (2) und Oberteil (2) verrastet werden, wodurch Unterteil (2) und Oberteil (3) über den Flügelring mechanisch miteinander verbunden werden. Die Erfindung betrifft weiterhin ein Pumpenlaufrad umfassend ein Verfahren nach einem der vorgenannten Ansprüche, wobei dass nach dem Verrasten der Rastmittel (44, 44') des Flügelrings (4, 4') mit den Rastmitteln (23, 24, 31, 32) von Unterteil (2) und Oberteil (3) verbleibende Rastöffnungen in einem nachgeschalteten Spritzvorgang verschlossen werden.

## Beschreibung

Die Erfindung betrifft ein Verfahren zur Herstellung eines Pumpenlaufrades nach dem Patentanspruch 1. Die Erfindung betrifft weiterhin ein Pumpenlaufrad nach dem Oberbegriff des Patentanspruchs 8.

Pumpenlaufräder, insbesondere Laufräder von Zentrifugal- oder Kreiselpumpen weisen üblicher Weise eine Anzahl von Flügeln auf, zwischen denen Kanäle gebildet sind, welche sich vom Zentrum des Pumpenlaufrades zum Außenumfang entlang einer gekrümmten Bahn erstrecken. Die Flügel sind dabei zwischen zwei voneinander beabstandeten Gehäuseteilen ausgebildet, sodass die Strömungskanäle als geschlossene Kanäle vom Innenumfang zum Außenumfang verlaufend ausgebildet sind.

Auf Grund der gekrümmten Ausbildung der Flügel gestaltet sich die Fertigung derartiger Pumpenlaufräder aufwendig. So ist es bekannt, wie Pumpenlaufräder aus mehreren Teilen zusammen zusetzen. Dabei können die Flügel von einem Gehäuseteil ausgebildet werden, wonach in einem weiteren Arbeitsgang ein zweites Gehäuseteil auf die Stirnkanten der Schaufeln aufgeschweißt wird. Es ist weiterhin bekannt, Pumpenlaufräder einstückig als Gussteil mit Hilfe verlorener Kerne zu fertigen. Da auf Grund der gekrümmten Geometrie der Flügel ein Herausziehen der Kerne in Längsrichtung der Strömungskanäle verhindert ist. Diese vorbekannten Herstellungsverfahren erweisen sich in der Praxis als sehr aufwendig.

Hier will die Erfindung Abhilfe schaffen. Der Erfindung liegt die Aufgabe zu Grunde, ein Verfahren zur Herstellung eines Pumpenlaufrades bereitzustellen, welches eine einfache und kostengünstige Erstellung des Pumpenlaufrades ermöglicht. Gemäß der Erfindung wird diese Aufgabe durch ein Verfahren mit den Merkmalen des Patentanspruchs 1 gelöst.

Mit der Erfindung ist ein Verfahren zur Herstellung eines Pumpenlaufrades bereitgestellt, welches eine einfache und kostengünstige Herstellung des Pumpenlaufrades ermöglicht. Durch die dreiteilige Unterteilung des Pumpenlaufrades in Form eines Unterteils, eines Oberteils sowie eines Flügelrings ist eine gleichzeitige Herstellung dieser Teile in einem Spritzgießverfahren mit einer Form in einer Spritzgießmaschine ermöglicht. Das Vorsehen von Rastmitteln ermöglicht eine einfache und positionsgenaue anschließende Montage dieser drei Teile, welche automatisiert, bevorzugt noch in der Spritzgießmaschine durchführbar ist. Damit ist der gesamte Herstellungsprozess - einschließlich der mechanischen Verbindung des Flügelrings mit dem Oberteil und dem Unterteil - in einer Spritzgießmaschine mit einer Form durchführbar. Nachfolgende Arbeitschritte sind nicht erforderlich. Bevorzugt sind die Rastmittel von Unterteil und Oberteil durch Rastöffnungen oder federnde Stege gebildet.

In Weiterbildung der Erfindung wird in das Unterteil eine metallische Laufbuchse eingespritzt. Hierdurch ist eine einfache Integration einer zuverlässigen Laufbuchse mit langer Standzeit ermöglicht.

In weiterer Ausgestaltung der Erfindung werden Unterteil, Flügelring und Oberteil in einem Arbeitsschritt in einer gemeinsamen Form gespritzt. Hierdurch ist eine rationale Herstellung des Pumpenlaufrades erzielt.

In Weiterbildung der Erfindung ist die Form aus zwei Formhälften gebildet, nämlich einer Formhälfte, die eine Matrize für das Unterteil aufweist und eine Formhälfte, die eine Matrize für das Oberteil aufweist, wobei nach dem Spritzgießen die Hälften auseinander gefahren werden und eine Hälfte relativ zu anderen Hälfte um 180° verschwenkt wird, derart, dass das Unterteil gegenüberliegend dem Oberteil angeordnet wird, nachfolgend das in einer Hälfte befindliche Flügelrad entnommen und zwischen Unterteil und Oberteil positioniert wird, wonach die Formhälften soweit zusammen gefahren werden, bis die Rastmittel des Flügelrings mit den Rastmitteln von Unterteil und Oberteil verrasten. Hierdurch ist die vollständige Herstellung des Pumpenlaufrades innerhalb der Form ermöglicht, wodurch der Herstellprozess weiter rationalisiert ist.

In Ausgestaltung der Erfindung wird der Flügelring aus einem Ring gebildet, an dessen Innenkante die Flügel über Abschernasen umlaufend angeformt sind, wobei die Rastmittel des Flügelrings an den Flügeln angeformt werden und wobei der Ring nach Verrasten der an dem Flügel angeformten Rastmittel mit den Rastmitteln von Unterteil und Oberteil entfernt wird. Hierdurch ist eine definierte Positionierung der Flügel zwischen Oberteil und Unterteil erzielt. Der umlaufende Ring ermöglicht eine einfache Handhabung der Flügel im Zuge der Positionierung und kann nach Verrasten der Flügel mit Unterteil und Oberteil einfach abgeschert werden.

In alternativer Ausgestaltung der Erfindung wird der Flügelring aus zwei parallel zueinander angeordneten Ringen gebildet, an denen die Flügel angeformt werden und an denen die Rastmittel angeformt werden, wobei die an den Ringen angeformten Rastmittel mit den Rastmitteln von Unterteil und Oberteil verrastet werden. Auch hier ist eine definierte Positionierung der Flügel sowie eine gute Handhabung erzielt. Die Ringe sind hier Bestandteil des Pumpenlaufrades und werden mit dem Unterteil und dem Oberteil verrastet. Dabei sind die Rastmittel bevorzugt durch umlaufende federnde Stege gebildet, welche vorzugsweise ringförmig ausgebildet sind. Die Stege weisen einen Hinterschnitt auf, welcher in den Hinterschnitt der Stege von Unterteil und Oberteil eingreift, wodurch eine einfache Verrastung der Ringe mit Unterteil und Oberteil ermöglicht ist.

In weiterer Ausgestaltung der Erfindung werden nach dem Verrasten der Rastmittel des Flügelrings mit den Rastmitteln von Unterteil und Oberteil verbleibende Rastöffnungen in einen nachgestalteten Spritzvorgang verschlossen. Hierdurch ist eine zusätzliche Fixierung der Flügel innerhalb des Pumpenlaufrades bewirkt.

Der vorliegenden Erfindung liegt weiterhin die Aufgabe zu Grunde, ein Pumpenlaufrad zu schaffen, welches einfach und kostengünstig herstellbar ist. Gemäß der Erfindung wird diese Aufgabe durch ein Pumpenlaufrad mit den Merkmalen des Patentanspruchs 8 gelöst. Die Verrastung der Flügel über Rastelemente mit dem Unterteil und dem Oberteil ermöglicht eine einfache Herstellung, wodurch die Herstellkosten reduziert sind.

In weiterer Ausgestaltung der Erfindung sind die Flügel an zwei gegenüberliegend angeordneten Ringen angeformt, welche über Rastmittel mit dem Unterteil und dem Oberteil verrastet sind. Vorteilhaft sind die nach der Verrastung verbleibenden Rastöffnungen von Unterteil und Oberteil zugespritzt.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die schematische Darstellung eines Verfahrens zur Herstellung eines Pumpenlaufrades;
- Fig. 2: die schematische Darstellung eines Pumpenlaufrades im Teilschnitt (vor Abscherung des Rings);
- Fig. 3: die Darstellung des Pumpenlaufrades aus Figur 2 in der Draufsicht (hälftige Darstellung);
- Fig. 4: die schematische Darstellung des Flügelrings des Pumpenlaufrades aus Figur 2;
- Fig. 5: die Detailansicht eines über eine Abschernase an dem Ring angeformten Flügels des Flügelrings aus Figur 4;
- Fig. 6: die schematische Darstellung eines Pumpenrades in einer weiteren Ausführungsform im Teilschnitt;
- Fig. 7: die schematische Darstellung des Pumpenlaufrades aus Figur 6 in Explosionsdarstellung im Teilschnitt (hälftige Darstellung);
- Fig. 8: die Detaildarstellungen der Einzelheiten "A" und "B" der Bauteile aus Figur 7;
- Fig. 9: die Detaildarstellung der Einzelheiten "C" und "D" aus Figur 8 und
- Fig. 10: die schematische Darstellung des Flügelrings im Schnitt E - F des Pumpenlaufrades nach Figur 6.

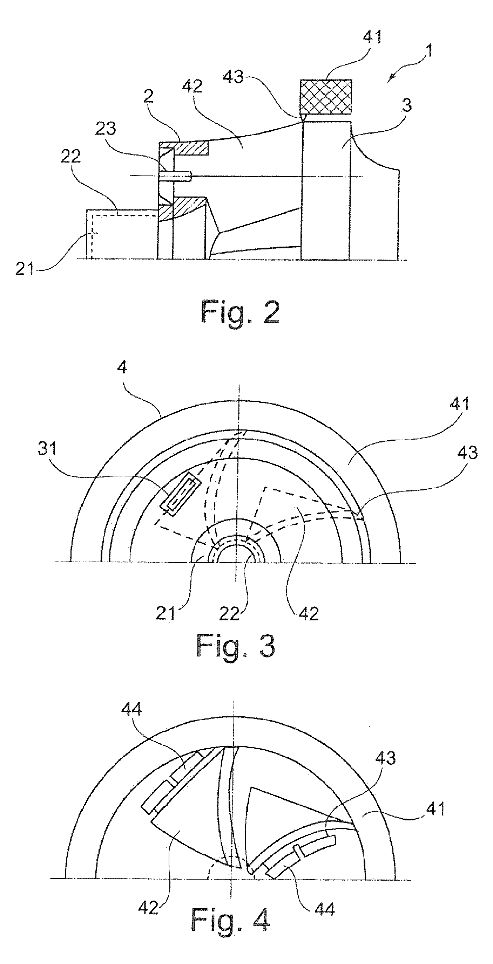

Das als Ausführungsbeispiel gewählte Pumpenlaufrad 1 gemäß Figur 2 ist gebildet aus einem Unterteil 2 und einem Oberteil 3, zwischen denen Flügel 42 eines Flügelrings 4 angeordnet sind.

Das als Kunststoffspritzgießteil hergestellte Unterteil 2 ist im Wesentlichen in Form einer kreisrunden Scheibe ausgebildet, an der zentrisch eine Buchsenaufnahme 21 angeformt ist, die eine metallische Buchse 22 umspritzt aufnimmt. Umlaufend sind um die Buchsenaufnahme 21 in dem Unterteil 2 Rastöffnungen 23 eingebracht.

Das ebenfalls als Kunststoffspritzgießteil hergestellte Oberteil 3 ist in Form eines trichterförmig ausgebildeten kreisrunden Rings ausgebildet. Umlaufend sind in dem Oberteil 3 vier schlitzartige Rastöffnungen 31 eingebracht. Alternativ können auch sechs oder acht schlitzartige Rastöffnungen vorgesehen sein.

Der ebenfalls als Kunststoffspritzgießteil hergestellte Flügelring 4 besteht im Ausführungsbeispiel aus einem kreisrunden Ring 41, an den umlaufend über Abschernasen 43 vier Flügel 42 angeformt sind. Die Flügel 42 sind mit Rastnasen 44 versehen, welche mit den Rastöffnungen 23 des Unterteils 2 bzw. den Rastöffnungen 31 des Oberteils 3 korrespondieren und in diese einrastbar sind. Die Flügel 42 des Flügelrings 4 sind über die Rastelemente 44 mit dem Unterteil 2 sowie dem Oberteil 3 rastend verbunden. Die Rastöffnungen 23 des Unterteils 2 sowie die Rastöffnungen 31 des Oberteils 3 sind im Ausführungsbeispiel zugespritzt.

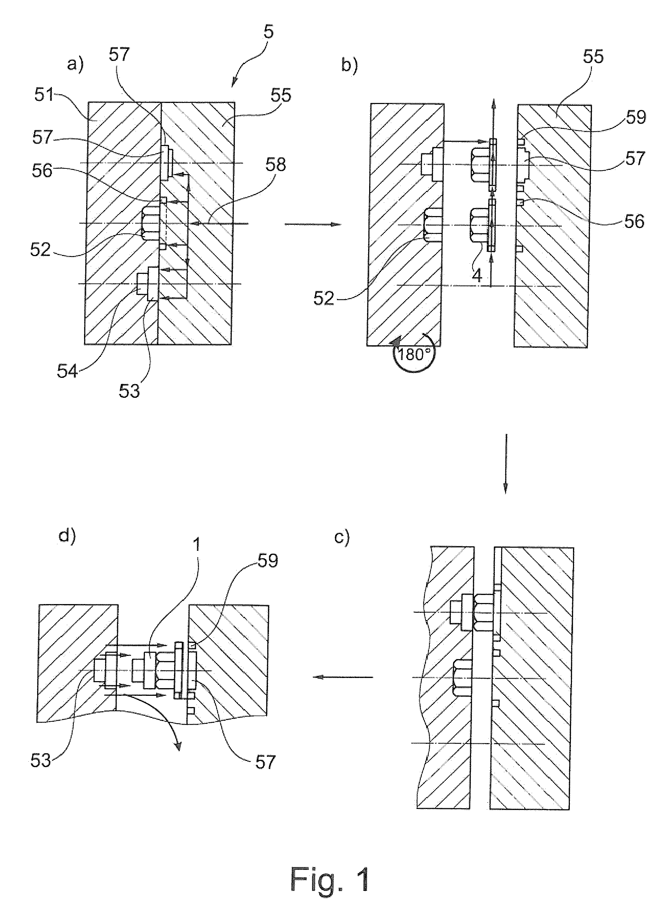

Die Herstellung des Pumpenlaufrades ist schematisch in Figur 1 dargestellt. Zunächst werden in einer gemeinsamen Form 5 das Unterteil 2, das Oberteil 3 sowie der Flügelring 4 im Kunststoff-Spritzgießverfahren hergestellt. Hierzu ist in der ersten, linken Formhälfte 51 zentrisch eine Matrize 52 für die Flügel 42 des Flügelrings 4 angeordnet. Unterhalb dieser Matrize 52 ist beabstandet zu dieser eine Matrize 53 für das Unterteil 2 angeordnet. Die Matrize 53 weist eine Aufnahme 54 für die zu umspritzende Buchse 22 auf. In der gegenüberliegend angeordneten zweiten, linken Formhälfte 55 ist gleichermaßen, jedoch nach oben beabstandet eine Matrize 57 für das Oberteil 3 eingebracht. Weiterhin ist zentrisch umlaufend der gegenüberliegenden Matrize 52 für die Flügel eine Matrize 56 für den Ring 41 des Flügelrings 4 angeordnet. Die Matrize 52 der ersten Formhälfte 51 und die Matrize 56 der zweiten Formhälfte 55 ergeben gemeinsam eine Matrize für einen Flügelring 4 und sind über die Aussparungen für die Abschernasen 43 miteinander verbunden. In der zweiten Formhälfte 55 sind weiterhin Kanäle 58 zum Einspritzen des Kunststoffmaterials in die Matrizen 53, 54, 56, 57 angeordnet.

Nach dem Einspritzen des Kunststoffmaterials in die Matrizen 52, 53, 56 und 57 der geschlossenen Form 5 werden die beiden Formhälften 51, 55 auseinander gefahren. Nachfolgend wird die linke, erste Formhälfte 51 um ihre Mittelachse um 180° rotiert, sodass das Unterteil 2 gegenüberliegend dem Oberteil 3 angeordnet ist. Nachfolgend wird der in der Matrize 52 der ersten Formhälfte 51 befindliche Flügelring 4 mittels eines - nicht dargestellten - Roboters aus der Matrize 52 heraus bewegt, wobei der Flügelring 4 an seinem Ring 41 gehalten wird und einer horizontalen Bewegung eine Rotation um die Bewegungsachse überlagert wird, wodurch die an den Ring 41 angeformten Flügel 42 aus der Matrize 52 der ersten Formhälfte 51 herausgelöst werden. Anschließend wird der Flügelring 4 derart zwischen das Unterteil 2 und das Oberteil 3 bewegt, dass die Mittelachse des Flügelrings 4 auf der Mittelachse von Unterteil 2 und Oberteil 3 liegt (Figur 1 b). Anschließend werden die beiden Formhälften 51, 55 der Form 5 soweit aufeinander zu bewegt, bis die an den Flügelringen 4 angeformten Rastelemente 44 in die Rastöffnungen 23 des Unterteils 2 sowie die Rastöffnungen 31 des Oberteils 3 einrasten. Der die Flügel 42 umgebende Ring 41 wird hierbei von einer in der rechten, zweiten Formhälfte 55 eingebrachten, die Matrize 57 umgebenden Ringnut 59 aufgenommen (Figur 1c). Anschließend werden die beiden Formhälften 51, 55 auseinander gefahren und das so fertiggestellte Pumpenlaufrad wird ausgeworfen (Figur 1d). Nachfolgend kann der umlaufende Ring 41 durch Abscheren der Abschernasen 43 einfach entfernt werden. Hierzu kann an der Form eine geeignete Abschervorrichtung vorgesehen sein.

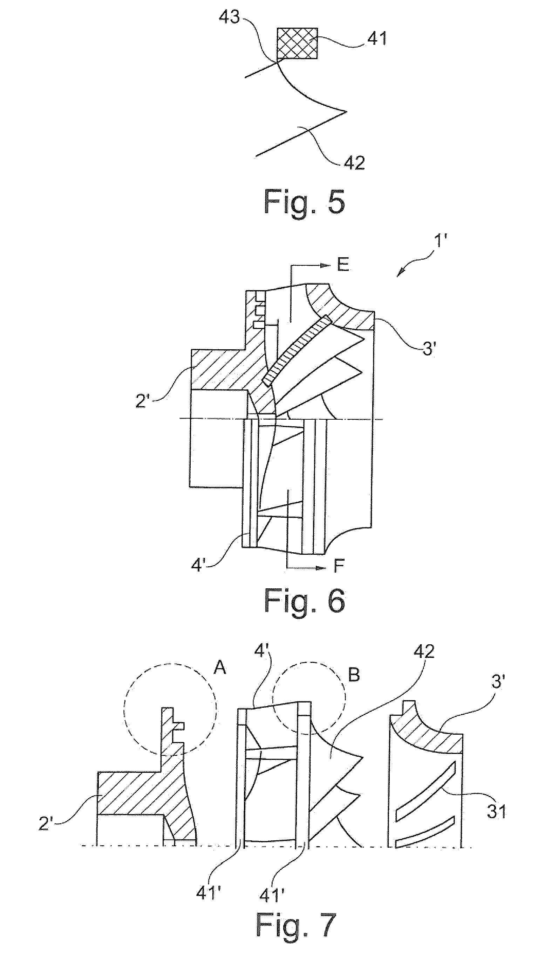

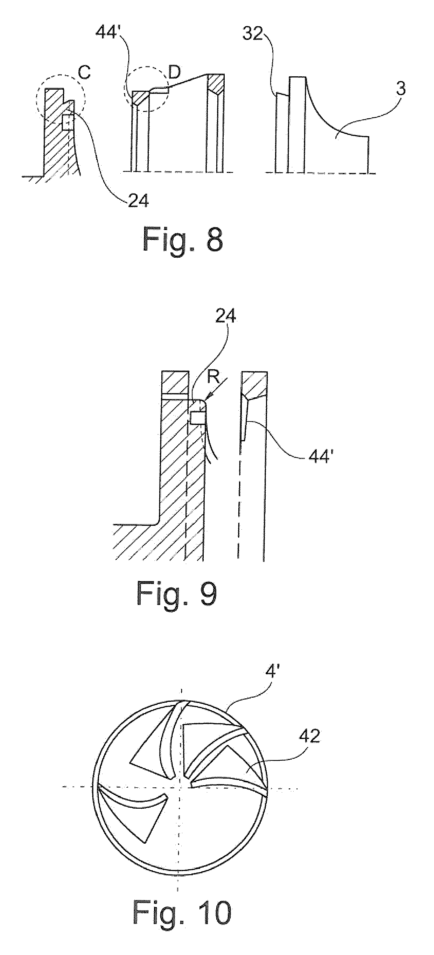

In Figur 6 ist ein Pumpenlaufrad in einer weiteren Ausführungsform gezeigt. Hierbei ist zwischen dem Unterteil 2' und Oberteil 3' ein Flügelring 4' angeordnet, der aus zwei parallel zueinander angeordneten Ringen 41' gebildet ist, an denen die Flügel 42 angeformt sind. An den Ringen 41 sind jeweils Rastelemente 44' in Form von umlaufenden einen Hinterschnitt aufweisenden Stegen angeordnet. An dem Unterteil 2' sowie auch an dem Oberteil 3' sind an ihrer dem Flügelring 4' zugewandten Seite hierzu korrespondierende Stege 24, 32 angeordnet, welche gleichfalls mit einem Hinterschnitt versehen sind, sodass das Rastelement 44' mit dem umlaufenden Stegen 24, 32 am Unterteil 2' und Oberteil 3' verrastbar sind. Die umlaufenden Stege 24, 32 sind zur Erleichterung des Rastvorgangs mit einem Radius R versehen (Figur 9).
In dieser Ausführungsform sind die Ringe 41' des Flügelrings 4' Bestandteil des Pumpenlaufrades 1.

## Patentansprüche

1. Verfahren zur Herstellung eines Pumpenlaufrades (1), umfassend folgende Schritte:
- Herstellung eines Unterteils (2) im Spritzgießverfahren, wobei Rastmittel zur Befestigung von Flügeln (42) angeordnet werden,
- Herstellung eines Oberteils (3) im Spritzgießverfahren, wobei Rastmittel zur Befestigung von Flügeln (42) angeordnet werden,
- Herstellung eines Flügelrings (4) im Spritzgießverfahren, umfassend eine Anzahl an Flügeln (42), welche über wenigstens einen Ring (42) miteinander verbunden sind, wobei Rastmittel (44, 44') zum Verrasten mit den Rastmitteln von Unterteil (2) und Oberteil (3) angeordnet werden,
- Montage des Pumpenlaufrades (1), wobei der Flügelring (4) zwischen Unterteil (2) und Oberteil (3) angeordnet wird und anschließend die Rastmittel (44, 44') des Flügelrings (4, 4') mit den Rastmitteln von Unterteil (2) und Oberteil (2) verrastet werden, wodurch Unterteil (2) und Oberteil (3) über den Flügelring mechanisch miteinander verbunden werden.

2. Verfahren nach Anspruch 1, **dadurch gekennzeichnet, dass** die Rastmittel von Unterteil (2) und Oberteil (3) durch Rastöffnungen (23, 31) oder federnde Stege (24, 32) gebildet sind.

3. Verfahren nach Anspruch 1 oder 2, **dadurch gekennzeichnet, dass** in das Unterteil (2) eine metallische Buchse (22) eingespritzt wird.

4. Verfahren nach einem der Ansprüche 1 bis 3, **dadurch gekennzeichnet, dass** Unterteil (2), Flügelring (4) und Oberteil (3) in einem Arbeitschritt in einer gemeinsamen Form (5) gespritzt werden.

5. Verfahren nach Anspruch 4, **dadurch gekennzeichnet, dass** die Form (5) aus zwei Formhälften (51, 55) gebildet ist, nämlich einer Formhälfte (51), die eine Matrize (53) für das Unterteil (2) aufweist und eine Formhälfte (55) , die eine Matrize (57) für das Oberteil (3) aufweist, wobei nach dem Spritzgießen die Hälften (51, 55) auseinander gefahren werden und eine Hälfte (51) relativ zur anderen Hälfte (55) um 180 Grad verschwenkt wird, derart, dass das Unterteil (2) gegenüberliegend dem Oberteil (3) angeordnet wird, nachfolgend das in einer Hälfte (51) befindliche Flügelrad (4) entnommen und zwischen Unterteil (2) und Oberteil (3) positioniert wird, wonach die Formhälften (51, 22) soweit zusammengefahren werden, bis die Rastmittel (44) des Flügelrings mit den Rastmitteln (23, 31) von Unterteil (2) und Oberteil (3) verrasten.

6. Verfahren nach einem der vorgenannten Ansprüche, **dadurch gekennzeichnet, dass** der Flügelring (4) aus einem Ring (41) gebildet wird, an dessen Innenkante die Flügel (42) über Abschernasen (43) umlaufend angeformt sind, wobei die Rastmittel (44) des Flügelrings (4) an den Flügeln (42) angeformt werden und wobei der Ring (41) nach Verrasten der an den Flügeln (42) angeformten Rastmittel (44) mit den Rastmitteln (23, 31) von Unterteil (2) und Oberteil (3) entfernt wird.

7. Verfahren nach einem der Ansprüche 1 bis 5, **dadurch gekennzeichnet, dass** der Flügelring (4') aus zwei parallel zueinander angeordneten Ringen (41') gebildet wird, an denen die Flügel (42) angeformt werden und an denen die Rastmittel (44') angeformt werden, wobei die an den Ringen (41') angeformten Rastmittel (44') mit den Rastmitteln (24, 32) von Unterteil (2') und Oberteil (3') verrastet werden.

8. Verfahren nach einem der vorgenannten Ansprüche, **dadurch gekennzeichnet, dass** nach dem Verrasten der Rastmittel (44, 44') des Flügelrings (4, 4') mit den Rastmitteln (23, 24, 31, 32) von Unterteil (2) und Oberteil (3) verbleibende Rastöffnungen in einem nachgeschalteten Spritzvorgang verschlossen werden.

9. Pumpenlaufrad (1), umfassend ein Unterteil (2) und ein Oberteil (3), zwischen denen eine Anzahl Flügel (42) angeordnet sind, **dadurch gekennzeichnet, dass** die Flügel (42) über Rastelemente (44) mit dem Unterteil (2) und dem Oberteil (3) verrastet sind, die in Rastmittel (23, 24, 31, 32) von Unterteil (2) und Oberteil (3) eingreifen.

10. Pumpenlaufrad nach Anspruch 9, **dadurch gekennzeichnet, dass** die Flügel (42) an zwei gegenüberliegend angeordneten Ringen (41') angeformt sind, welche über Rastmittel (44') mit dem Unterteil (2) und dem Oberteil (3) verrastet sind.

11. Pumpenlaufrad nach Anspruch 9 oder 10, **dadurch gekennzeichnet, dass** nach der Verrastung verbleibende Rastöffnungen von Unterteil (2) und Oberteil (3) zugespritzt sind.
